# EUROPEAN PATENT APPLICATION

(11) **EP 3 885 980 A1**
(43) Date of publication of application: **29.09.2021**
(21) Application number: 21159647.3
(22) Date of filing: 26.02.2021
(51) Int. Cl.: G06K 9/00, G06T 11/60, G06K 9/62, G06N 3/02

(54) **METHOD AND APPARATUS FOR PROCESSING INFORMATION, DEVICE, MEDIUM AND COMPUTER PROGRAM PRODUCT**

(30) Priority: 23.03.2020 CN 202010205909
(71) Applicant: Beijing Baidu Netcom Science and Technology Co., Ltd., Beijing 100085 (CN)
(72) Inventor: LEI, Chaobing, Beijing, Beijing 100085 (CN)
(74) Representative: Schollweck, Susanne

(57) **Abstract**

Embodiments of the present disclosure disclose a method and apparatus for processing information, a device, a medium and a computer program product. A specific embodiment of the method includes: acquiring a face image, and acquiring coordinates of key points of a face contained in the face image, wherein the face contained in the face image does not wear a mask; acquiring a mask image, and combining, based on the coordinates of the key points, the mask image with the face image to generate a mask wearing face image containing a mask wearing face, wherein the mask image belongs to a mask image set, the mask image set includes at least one kind of mask image, and different kinds of mask images contain different masks; and determining the mask wearing face image as a sample for training a deep neural network.

## Description

### TECHNICAL FIELD

Embodiments of the present disclosure relate to the field of computer technology, specifically to the field of Internet technology, and particularly to a method and apparatus for processing information, a device, a medium and a computer program product.

### BACKGROUND

Face detection refers to, for any given image, search the image by means of certain strategy to determine whether the image contains a face, or to determine the position of the face contained in the image.

The use of a deep neural network to implement face detection of an image is the current mainstream method of face detection. An important characteristic of the deep neural network is data drive, that is, if there are a lot of training samples for training, the detection effect of the deep neural network is better.

### SUMMARY

Embodiments of the present disclosure provide a method and apparatus for processing information, a device, a medium and a computer program product.

In a first aspect, embodiments of the present disclosure provide a method for processing information, comprising: acquiring a face image, and acquiring coordinates of key points of a face contained in the face image, wherein the face contained in the face image does not wear a mask; acquiring a mask image, and combining, based on the coordinates of the key points, the mask image with the face image to generate a mask wearing face image containing a mask wearing face, wherein the mask image belongs to a mask image set, the mask image set comprises at least one kind of mask image, and different kinds of mask images contain different masks; and determining the mask wearing face image as a sample for training a deep neural network, wherein the deep neural network is used to detect faces.

In some embodiments, wherein the method further comprises: acquiring a target face image, and acquiring a target mask image from the mask image set; combining the target mask image to a region beyond a face in the target face image to obtain a combination result; and determining the combination result as another sample for training the deep neural network.

In some embodiments, wherein the training steps of the deep neural network comprise: acquiring a face image sample, and inputting the face image sample into a deep neural network to be trained; predicting, by using the deep neural network to be trained, whether the face image sample contains a mask wearing face to obtain a first prediction result; determining a loss value corresponding to the first prediction result based on the first prediction result, a reference result about whether the face image sample contains a mask wearing face, and a preset loss function; and training, based on the loss value, the deep neural network to be trained to obtain a trained deep neural network.

In some embodiments, wherein the training steps further comprise: predicting, by using the deep neural network to be trained, a position of the face contained in the face image sample to obtain a second prediction result; and the predicting, by using the deep neural network to be trained, whether the face image sample contains a mask wearing face comprises: predicting, by using the deep neural network to be trained, whether the object at the position is a face wearing a mask to obtain the first prediction result.

In some embodiments, wherein after the mask wearing face image is generated, the method further comprises: adjusting the position of the mask contained in the mask wearing face image to obtain an adjusted mask wearing face image, wherein the position of the mask comprises a longitudinal position.

In some embodiments, wherein the combining the mask image with the face image comprises: updating the size of the mask image according to a first preset corresponding relationship between specified points in the mask image and the coordinates of the key points of the face, and the acquired coordinates of the key points, so that the size of the updated mask image matches the size of the face in the acquired face image, wherein the coordinates of the key points in the first preset corresponding relationship comprise coordinates of key points on an edge of the face; and combining the updated mask image with the face image, so that each of the at least two specified points in the updated mask image overlaps the key point corresponding to the specified point in the face image, to generate a first mask wearing face image containing a mask wearing face.

In some embodiments, wherein the combining the mask image with the face image comprises: updating the size of the mask image according to a second preset corresponding relationship between the specified points in the mask image and the coordinates of the key points of the face, and the coordinates of the acquired key points, and combining the updated mask image with the face image to generate a second mask wearing face image, wherein the positions of the masks on the mask wearing faces in the second mask wearing face image and the first mask wearing face image are different, and the position of the mask comprises a longitudinal position.

In a second aspect, embodiments of the present disclosure provide an apparatus for processing information, comprising: an acquisition unit, configured to acquire a face image, and acquire coordinates of key points of a face contained in the face image, wherein the face contained in the face image does not wear a mask; a combination unit, configured to acquire a mask image, and combine, based on the coordinates of the key points, the mask image with the face image to generate a mask wearing face image containing a mask wearing face, wherein the mask image belongs to a mask image set, the mask image set comprises at least one kind of mask image, and different kinds of mask images contain different masks; and a determination unit, configured to determine the mask wearing face image as a sample for training a deep neural network, wherein the deep neural network is used to detect faces.

In some embodiments, wherein the apparatus further comprises: a target acquisition unit, configured to acquire a target face image and acquire a target mask image from the mask image set; a target combination unit, configured to combine the target mask image to a region beyond a face in the target face image to obtain a combination result; and a sample determination unit, configured to determine the combination result as another sample for training the deep neural network.

In some embodiments, wherein the training steps of the deep neural network comprise: acquiring a face image sample, and inputting the face image sample into a deep neural network to be trained; predicting, by using the deep neural network to be trained, whether the face image sample contains a mask wearing face to obtain a first prediction result; determining a loss value corresponding to the first prediction result based on the first prediction result, a reference result about whether the face image sample contains a mask wearing face, and a preset loss function; and training, based on the loss value, the deep neural network to be trained to obtain a trained deep neural network.

In some embodiments, wherein the training steps further comprise: predicting, by using the deep neural network to be trained, a position of the face contained in the face image sample to obtain a second prediction result; and the predicting, by using the deep neural network to be trained, whether the face image sample contains a mask wearing face comprises: predicting, by using the deep neural network to be trained, whether the object at the position is a face wearing a mask to obtain the first prediction result.

In some embodiments, wherein the apparatus further comprises: an adjustment unit, configured to adjust, after the mask wearing face image is generated, the position of the mask contained in the mask wearing face image to obtain an adjusted mask wearing face image, wherein the position of the mask comprises a longitudinal position.

In some embodiments, wherein the combination unit is further configured to combine, based on the coordinates of the key points, the mask image with the face image to generate a mask wearing face image containing a mask wearing face as follows: updating the size of the mask image according to a first preset corresponding relationship between specified points in the mask image and the coordinates of the key points of the face, and the acquired coordinates of the key points, so that the size of the updated mask image matches the size of the face in the acquired face image, wherein the coordinates of the key points in the first preset corresponding relationship comprise coordinates of key points on an edge of the face; and combining the updated mask image with the face image, so that each of the at least two specified points in the updated mask image overlaps the key point corresponding to the specified point in the face image, to generate a first mask wearing face image containing a mask wearing face.

In some embodiments, wherein the combination unit is further configured to combine, based on the coordinates of the key points, the mask image with the face image to generate a mask wearing face image containing a mask wearing face as follows: updating the size of the mask image according to a second preset corresponding relationship between the specified points in the mask image and the coordinates of the key points of the face, and the coordinates of the acquired key points, and combining the updated mask image with the face image to generate a second mask wearing face image, wherein the positions of the masks on the mask wearing faces in the second mask wearing face image and the first mask wearing face image are different, and the position of the mask comprises a longitudinal position.

In a third aspect, embodiments of the present disclosure provide an electronic device, comprising: one or more processors; and a storage apparatus, storing one or more programs, wherein the one or more programs, when executed by the one or more processors, cause the one or more processors to implement the method for searching a video segment provided by the first aspect.

In a forth aspect, embodiments of the present disclosure provide a computer-readable medium, storing a computer program thereon, wherein the program, when executed by a processor, causes the processor to implement the method for searching a video segment provided by the first aspect.

In a fifth aspect, embodiments of the present disclosure provide a computer program product including a computer program, where the computer program, when executed by a processing apparatus, implements the method for detecting an obstacle according to the first aspect.

In the method for processing information provided by embodiments of the present disclosure, firstly, acquire a face image, and acquire coordinates of key points of a face contained in the face image, wherein the face contained in the face image does not wear a mask; then, acquire a mask image, and combine, based on the coordinates of the key points, the mask image with the face image to generate a mask wearing face image containing a mask wearing face, wherein the mask image belongs to a mask image set, the mask image set comprises at least one kind of mask image, and different kinds of mask images contain different masks; and finally, determine the mask wearing face image as a sample for training a deep neural network, wherein the deep neural network is used to detect faces. The embodiments of the present application can generate rich mask wearing face samples by using various masks in the mask image set, thereby training the deep neural network that can accurately detect mask wearing faces, and improving the generalization of the deep neural network.

### BRIEF DESCRIPTION OF THE DRAWINGS

After reading detailed descriptions of non-limiting embodiments with reference to the following accompanying drawings, other features, objectives and advantages of the present disclosure will become more apparent.
Fig. 1 is a diagram of an exemplary system architecture to which some embodiments of the present application may be applied;
Fig. 2 is a flowchart of an embodiment of a method for processing information according to the present disclosure;
Fig. 3 is a schematic diagram of an application scenario of the method for processing information according to the present application;
Fig. 4 is a flowchart of another embodiment of a method for processing information according to the present disclosure;
Fig. 5 is a schematic structural diagram of an embodiment of an apparatus for processing information according to the present disclosure; and
Fig. 6 is a schematic structural diagram of a computer system of an electronic device adapted to implement some embodiments of the present disclosure.

### DETAILED DESCRIPTION OF EMBODIMENTS

The present disclosure will be further described below in detail in combination with the accompanying drawings and the embodiments. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that the embodiments in the present disclosure and the features in the embodiments may be combined with each other on a non-conflict basis. The present disclosure will be described below in detail with reference to the accompanying drawings and in combination with the embodiments.

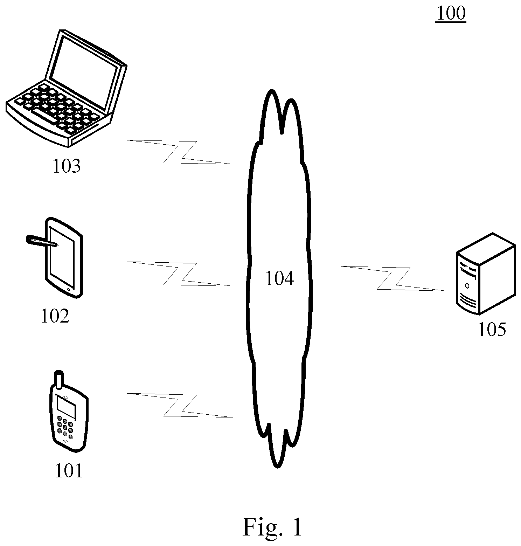

Fig. 1 shows an exemplary system architecture 100 to which an embodiment of a method for processing information or an apparatus for processing information according to the present application may be applied.

As shown in Fig. 1, the system architecture 100 may include a terminal device 101, 102, and 103, a network 104, and a server 105. The network 104 serves as a medium providing a communication link between the terminal device 101, 102, or 103 and the server 105. The network 104 may include various types of connections, such as wired or wireless communication links, or optical fiber cables.

A user may use the terminal device 101, 102, or 103 to interact with the server 105 through the network 104 to receive or send messages. The terminal device 101, 102, or 103 may be installed with various communication client applications, such as video applications, live broadcast applications, instant messaging tools, E-mail clients, and social platform software.

The terminal device 101, 102, or 103 here may be hardware or software. When the terminal device 101, 102, or 103 is hardware, the terminal device may be various electronic devices with display screens, including but not limited to a smart phone, a tablet computer, an e-book reader, a laptop portable computer and a desktop computer. When the terminal device 101, 102, or 103 is software, the terminal device may be installed in the above-listed electronic devices. The terminal device may be implemented as a plurality of software programs or software modules (for example, a plurality of software programs or software modules used to provide distributed services), or as a single software program or software module. Specific limitations are not given here.

The server 105 may be a server providing various services, for example, a back-end server providing support for the terminal device 101, 102, or 103. The back-end server may analyze the received data such as a face image, and feed processing results (for example, a mask wearing face image) back to the terminal device.

It should be noted that the method for processing information according to the embodiments of the present disclosure may be performed by the server 105 or the terminal device 101, 102, or 103. Accordingly, the apparatus for processing information may be arranged in the server 105 or the terminal device 101, 102, or 103.

It should be understood that the numbers of the terminal devices, the network, and the server in Fig. 1 are merely illustrative. Any number of terminal devices, networks and servers may be configured according to actual requirements.

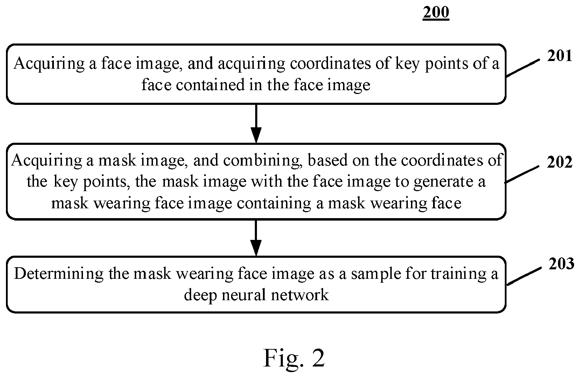

Further referring to Fig. 2, a flow 200 of an embodiment of a method for processing information according to the present application is shown. The method for processing information includes the following steps:

Step 201: acquiring a face image, and acquiring coordinates of key points of a face contained in the face image, wherein the face contained in the face image does not wear a mask.

In this embodiment, the execution subject (for example, the server or the terminal device shown in Fig. 1) of the method for processing information may acquire the face image, and acquire the coordinates of key points of the face in the face image. Specifically, the execution subject may acquire the face image locally or from other electronic device. The execution subject may directly acquire the coordinates of the key points locally or from other electronic device, or the execution subject may also detect the key points of the face image to obtain the coordinates of the key points. The face in the face image does not wear a mask.

Step 202: acquiring a mask image, and combining, based on the coordinates of the key points, the mask image with the face image to generate a mask wearing face image containing a mask wearing face, wherein the mask image belongs to a mask image set, the mask image set includes at least one kind of mask image, and different kinds of mask images contain different masks.

In this embodiment, the execution subject may also acquire the mask image, and the execution subject may combine the acquired mask image with the face image based on the coordinates of the acquired key points, and use the combined image as the mask wearing face image. There is a mask wearing face in the mask wearing face image, that is, the face at the mask is occluded. In this way, at least one face in the face image is partially occluded, and the full face is no longer presented.

The mask image is an image in the mask image set. The mask image set may include different kinds of mask images. In practice, the execution subject may randomly acquire the mask image from the mask image set, or may acquire the mask image in a preset order.

In practice, the execution subject may combine the mask image with the face image based on the coordinates of the key points in various ways. For example, the execution subject may map the mask image to the face image with the midpoint of a line connecting two key points in the middle of the upper lip as a point where the center point of the mask image will be combined.

Specifically, the execution subject may not only combine the mask image with the face image by means of mapping, but also in various other ways. For example, the execution subject may also use the ways of covering, replacing (replacing a partial image of the face image with the mask image), or placing the mask image on the upper layer of the face image.

The mask image can only be combined with the face in the face image, so that the mask in the mask wearing face image obtained is within an original face region, that is, a bounding box of the face. In addition, the mask image can not only be combined with the face, but also with an image region around the face, so that parts (such as the left, right and/or lower edge of the mask) of the mask in the mask wearing face image obtained are beyond the original face region.

Step 203: determining the mask wearing face image as a sample for training a deep neural network, wherein the deep neural network is used to detect faces.

In this embodiment, the execution subject may determine the generated mask wearing face image as the sample for training the deep neural network, wherein the deep neural network here is used to detect faces (such as a face wearing a mask, and a face not wearing a mask) . Specifically, the deep neural network is any deep neural network that can be used to detect faces, such as a convolutional neural network, a generative adversarial network, or a residual neural network.

In practice, the execution subject or other electronic device may train the deep neural network with the mask wearing face image as a sample, so as to obtain a trained deep neural network. Samples used in the actual training process include a certain proportion of mask wearing face images (a small proportion) and a certain proportion of images containing faces not wearing masks (a large proportion), so that the deep neural network can not only recognize a face, but also can accurately detect a face wearing a mask.

The method provided by the above embodiment of the present application can generate rich mask wearing face samples by using various masks in the mask image set, thereby training the deep neural network that can accurately detect mask wearing faces, and improving the generalization of the deep neural network.

In some optional implementation modes of this embodiment, the above-mentioned method may further include: acquiring a target face image, and acquiring a target mask image from the mask image set; combining the target mask image to a region beyond a face in the target face image to obtain a combination result; and determining the combination result as another sample for training the deep neural network.

In these optional implementation modes, the execution subject may acquire the target face image and the target mask image, and combine the target mask image to the region beyond the face in the target face image to obtain the combination result. The face contained in the target face image here may wear a mask or not wear a mask.

These implementation modes can add a mask that is not worn on the face to the face image to enrich sample information, thereby preventing the trained deep neural network from identifying the mask not worn on the face as a mask worn on the face, and improving the detection accuracy of the deep neural network.

In some optional implementation modes of this embodiment, the training steps of the deep neural network include: acquiring a face image sample, and inputting the face image sample into a deep neural network to be trained; predicting, by using the deep neural network to be trained, whether the face image sample contains a mask wearing face to obtain a first prediction result; determining a loss value corresponding to the first prediction result based on the first prediction result, a reference result about whether the face image sample contains a mask wearing face, and a preset loss function; and training, based on the loss value, the deep neural network to be trained to obtain a trained deep neural network.

In these optional implementation modes, the execution subject may predict, by using the deep neural network to be trained, whether the acquired face image sample contains a mask wearing face. The predicted result, that is, the first prediction result, may include two results, yes or no, and may also refer to the probability that the prediction is yes. The reference result is real data marked in advance on the face image sample.

The execution subject or other electronic device may input the reference result and the first prediction result into the preset loss function to obtain the loss value. The execution subject may perform training in various ways based on the loss value. For example, the execution subject may use the loss value as a total loss value, and use the loss value to perform back propagation so as to perform training. In addition, the execution subject may also use the sum of the loss value and other loss values as the total loss value for back propagation. The other loss values here may include, for example, a loss value for detecting the position of the face. The position of the face may be expressed by the vertex coordinates and/or width and height (or length and width) of the bounding box. For example, the position of the face may be the width and height of the bounding box, and the midpoint or the vertex of the upper left corner of the bounding box.

These implementation modes can increase the loss value about whether the face image sample contains a mask wearing face, so that the deep neural network can better learn the difference between a face wearing a mask and a face not wearing a mask.

In some optional application scenarios of these implementation modes, the training steps may further include: predicting, by using the deep neural network to be trained, a position of the face contained in the face image sample to obtain a second prediction result. In these implementation modes, the predicting, by using the deep neural network to be trained, whether the face image sample contains a mask wearing face may include: predicting, by using the deep neural network to be trained, whether the object at the position is a face wearing a mask to obtain the first prediction result.

In these optional application scenarios, the execution subject may further predict the position of the face in the face image sample, that is, the position of the bounding box, and the predicted position is the second prediction result. The execution subject or other electronic device may predict whether the object at the position included in the second prediction result is a mask wearing face to obtain the first prediction result.

In addition, the training steps may further include: predicting, by using the deep neural network to be trained, whether the object at the position is a face to obtain a third prediction result. That is, the execution subject or other electronic device may further predict whether the object at the position, that is, the bounding box, is a face, and the predicted classification result is yes or no. The classification result here may only include yes or no, or it may refer to the probability that the prediction is yes.

In practice, the execution subject or other electronic device may determine, based on each prediction result and the reference result corresponding to the prediction result, the loss value of the prediction result. After that, the loss values are added to obtain the total loss value used to train the deep neural network.

These application scenarios may determine at the predicted position whether the object is a face wearing a mask to obtain the more accurate first prediction result, thereby improving the accuracy of the determined loss value, and improving the accuracy of the trained deep neural network.

In some optional implementation modes of this embodiment, after step 202, the method may further include: adjusting the position of the mask contained in the mask wearing face image to obtain an adjusted mask wearing face image, wherein the position of the mask includes a longitudinal position.

In these optional implementation modes, the execution subject may adjust the position of the mask in the mask wearing face image, and use the adjusted mask wearing face image as a sample for training the deep neural network. The adjusted position of the mask may include a horizontal position and/or a longitudinal position. For example, the adjustment here may include upward adjustment or downward adjustment.

These implementation modes may easily generate mask wearing face images, thereby imitating real images of different people wearing masks more realistically, which not only enriches training samples, but also improves the recall rate and detection accuracy of the trained deep neural network.

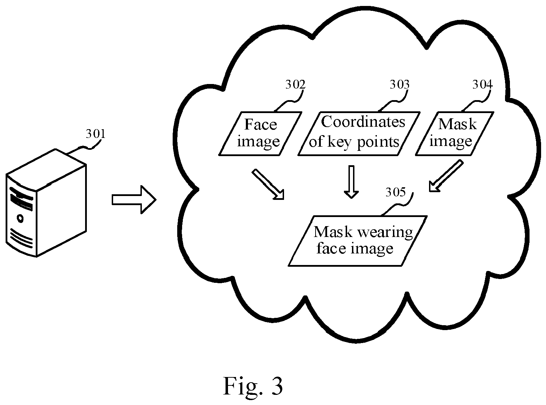

Continuing to refer to Fig. 3, Fig. 3 is a schematic diagram of an application scenario of the method for processing information in this embodiment. In the application scenario of Fig. 3, the execution subject 301 may acquire a face image 302 and acquire coordinates 303 of key points of a face contained in the face image 302, wherein the face contained in the face image does not wear a mask. The execution subject 301 acquires a mask image 304, and combines, based on the coordinates 303 of the key points, the mask image 304 with the face image 302 to generate a mask wearing face image 305 containing a mask wearing face, wherein the mask image 304 belongs to a mask image set, the mask image set includes at least one kind of mask image, and different kinds of mask images contain different masks, for example, the two mask images may include a gray active carbon mask and a white N95 mask respectively. The mask wearing face image is determined as a sample for training a deep neural network, wherein the deep neural network is used to detect faces.

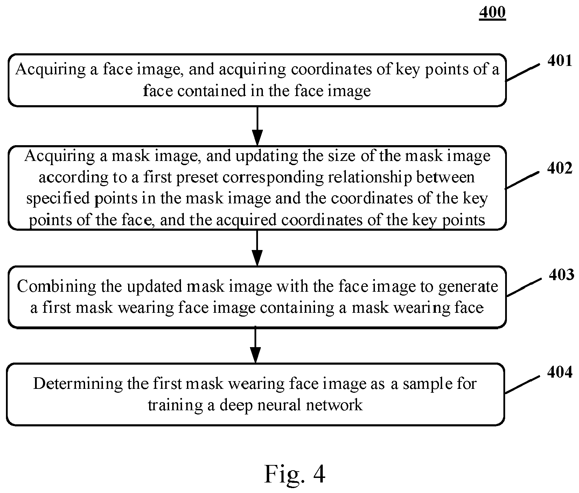

Further referring to Fig. 4, a flow 400 of another embodiment of a method for processing information is shown. The process 400 of the method for processing information includes the following steps:

Step 401: acquiring a face image, and acquiring coordinates of key points of a face contained in the face image, wherein the face contained in the face image does not wear a mask.

In this embodiment, the execution subject (for example, the server or the terminal device shown in Fig. 1) of the method for processing information may acquire the face image, and acquire the coordinates of key points of the face in the face image. Specifically, the execution subject may acquire the face image locally or from other electronic device. The execution subject may directly acquire the coordinates of the key points locally or from other electronic device, or the execution subject may also detect the key points of the face image to obtain the coordinates of the key points. The face in the face image does not wear a mask.

Step 402: acquiring a mask image, and updating the size of the mask image according to a first preset corresponding relationship between specified points in the mask image and the coordinates of the key points of the face, and the acquired coordinates of the key points, so that the size of the updated mask image matches the size of the face in the acquired face image, wherein the coordinates of the key points in the first preset corresponding relationship include coordinates of key points on an edge of the face.

In this embodiment, the execution subject may further acquire the mask image, and the execution subject may update the size of the acquired mask image based on the preset corresponding relationship (first preset corresponding relationship) and the acquired coordinates of the key points. The size here may refer to width and/or height, and may also refer to shape and the like. The first preset corresponding relationship is also a preset mapping relationship. In order to match the size of the mask image with the face in the face image when the mask image is combined, after the size of the mask image is updated, the shape of the mask image may be changed relative to the shape before update. For example, if the face in the face image is wide, the mask image may be updated to a wider image.

The size of the updated mask image here matches the size of the face in the acquired face image, so that after the updated face image is combined with the mask image, the size of the mask in the mask wearing face image obtained is appropriate relative to the face (for example, the relative size is within a preset value range).

In practice, the key points obtained by detection may include the key points on the edge of the face. The coordinates of the key points on the edge of the face in the first preset corresponding relationship may be all or part of the coordinates of the detected key points on the edge of the face.

The specified points may be any point in the mask image, such as a center point or points near the edge of the mask. Specifically, the points near the edge of the mask may include points on the edge of the mask and/or around (the distances from the edge are smaller than a preset threshold) the edge of the mask.

Step 403: combining the updated mask image with the face image, so that each of the at least two specified points in the updated mask image overlaps the key point corresponding to the specified point in the face image, to generate a first mask wearing face image containing a mask wearing face.

In this embodiment, the execution subject may combine the updated mask image with the face image. During combining the images, the specified points in the mask image overlap the key points corresponding to the specified points . The key points here are the key points in the face image and in the first preset corresponding relationship.

In some optional implementation modes of this embodiment, the combining, based on the coordinates of the key points, the mask image with the face image to generate a mask wearing face image containing a mask wearing face may include: updating the size of the mask image according to a second preset corresponding relationship between the specified points in the mask image and the coordinates of the key points of the face, and the coordinates of the acquired key points, and combining the updated mask image with the face image to generate a second mask wearing face image, wherein the size of the updated mask image corresponding to the second preset corresponding relationship matches the size of the face in the acquired face image, the coordinates of the key points in the second preset corresponding relationship include coordinates of key points on the edge of the face, the positions of the masks on the mask wearing faces in the second mask wearing face image and the first mask wearing face image are different, and the position of the mask includes a longitudinal position.

In these optional implementation modes, the execution subject may further generate the second mask wearing face image based on the second preset corresponding relationship. Both the first mask wearing face image and the second mask wearing face image include mask wearing faces. The positions (such as longitudinal positions and/or horizontal positions) of the masks in the mask wearing face images generated by using the two corresponding relationships may be different.

After the updated mask image is combined with the face image, each of the at least two specified points of the updated mask image also overlaps the key point corresponding to the specified point in the face image.

These implementation modes use different corresponding relationships to generate mask wearing face images with different mask positions, which can simulate that some people like to wear masks at higher positions, and some people do the opposite in real life. In this way, the training samples are enriched, and the recall rate and detection accuracy of the trained deep neural network can also be improved.

Step 404: determining the mask wearing face image as a sample for training a deep neural network, wherein the deep neural network is used to detect faces.

In this embodiment, the execution subject may determine the generated mask wearing face image as the sample for training the deep neural network, wherein the deep neural network here is used to detect faces.

In this embodiment, the size of the mask image can be updated by using the first preset corresponding relationship, so that the mask image can be more matched with the face in the face image, and the mask wearing face image is more realistic. In addition, the mask image can properly replace the part of the face in the original face image and be displayed after image combination.

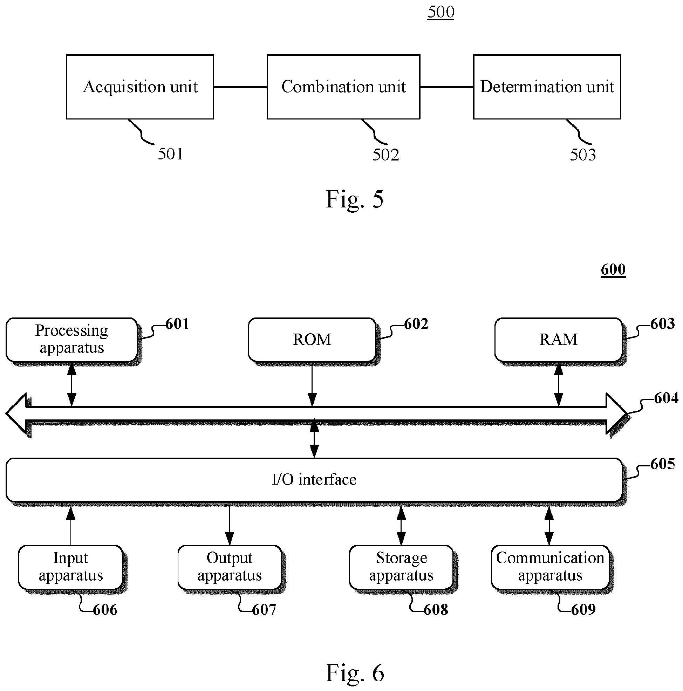

Further referring to Fig. 5, as an implementation of the methods shown in the above figures, the present application provides an embodiment of an apparatus for processing information. The embodiment of the apparatus corresponds to the embodiment of the method shown in Fig. 2. In addition to the features described below, the embodiment of the apparatus may further include the same or corresponding features or effects as the embodiment of the method shown in Fig. 2. The apparatus may be applied to various electronic devices.

As shown in Fig. 5, the apparatus 500 for processing information in this embodiment includes: an acquisition unit 501, a combination unit 502, and a determination unit 503. The acquisition unit 501 is configured to acquire a face image, and acquire coordinates of key points of a face contained in the face image, wherein the face contained in the face image does not wear a mask; the combination unit 502 is configured to acquire a mask image, and combine, based on the coordinates of the key points, the mask image with the face image to generate a mask wearing face image containing a mask wearing face, wherein the mask image belongs to a mask image set, the mask image set includes at least one kind of mask image, and different kinds of mask images contain different masks; and the determination unit 503 is configured to determine the mask wearing face image as a sample for training a deep neural network, wherein the deep neural network is used to detect faces.

In this embodiment, the specific processing of the acquisition unit 501, the combination unit 502, and the determination unit 503 of the apparatus 500 for processing information and the technical effects achieved may be referred to the relevant descriptions of step 201, step 202, and step 203 in the embodiment corresponding to Fig. 2, and details are not described herein again.

In some optional implementation modes of this embodiment, the apparatus further includes: a target acquisition unit, configured to acquire a target face image and acquire a target mask image from the mask image set; a target combination unit, configured to combine the target mask image to a region beyond a face in the target face image to obtain a combination result; and a sample determination unit, configured to determine the combination result as another sample for training the deep neural network.

In some optional implementation modes of this embodiment, the training steps of the deep neural network include: acquiring a face image sample, and inputting the face image sample into a deep neural network to be trained; predicting, by using the deep neural network to be trained, whether the face image sample contains a mask wearing face to obtain a first prediction result; determining a loss value corresponding to the first prediction result based on the first prediction result, a reference result about whether the face image sample contains a mask wearing face, and a preset loss function; and training, based on the loss value, the deep neural network to be trained to obtain a trained deep neural network.

In some optional implementation modes of this embodiment, the training steps further include: predicting, by using the deep neural network to be trained, a position of the face contained in the face image sample to obtain a second prediction result; and the predicting, by using the deep neural network to be trained, whether the face image sample contains a mask wearing face may include: predicting, by using the deep neural network to be trained, whether the object at the position is a face wearing a mask to obtain the first prediction result.

In some optional implementation modes of this embodiment, the apparatus further includes: an adjustment unit, configured to adjust, after the mask wearing face image is generated, the position of the mask contained in the mask wearing face image to obtain an adjusted mask wearing face image, wherein the position of the mask includes a longitudinal position.

In some optional implementation modes of this embodiment, the combination unit is further configured to combine, based on the coordinates of the key points, the mask image with the face image to generate a mask wearing face image containing a mask wearing face as follows: updating the size of the mask image according to a first preset corresponding relationship between specified points in the mask image and the coordinates of the key points of the face, and the acquired coordinates of the key points, so that the size of the updated mask image matches the size of the face in the acquired face image, wherein the coordinates of the key points in the first preset corresponding relationship include coordinates of key points on an edge of the face; and combining the updated mask image with the face image, so that each of the at least two specified points in the updated mask image overlaps the key point corresponding to the specified point in the face image, to generate a first mask wearing face image containing a mask wearing face.

In some optional implementation modes of this embodiment, the combination unit is further configured to combine, based on the coordinates of the key points, the mask image with the face image to generate a mask wearing face image containing a mask wearing face as follows: updating the size of the mask image according to a second preset corresponding relationship between the specified points in the mask image and the coordinates of the key points of the face, and the coordinates of the acquired key points, and combining the updated mask image with the face image to generate a second mask wearing face image, wherein the positions of the masks on the mask wearing faces in the second mask wearing face image and the first mask wearing face image are different, and the position of the mask includes a longitudinal position.

As shown in Fig. 6, the electronic device 600 may include a processing apparatus (for example, a central processing unit, a graphics processor, etc.) 601, which may execute various appropriate actions and processes in accordance with a program stored in a read-only memory (ROM) 602 or a program loaded into a random access memory (RAM) 603 from a storage apparatus 608. The RAM 603 also stores various programs and data required by operations of the electronic device 600. The processing apparatus 601, the ROM 602 and the RAM 603 are connected to each other through a bus 604. An input/output (I/O) interface 605 is also connected to the bus 604.

Generally, the following apparatuses may be connected to the I/O interface 605: an input apparatus 606 including a touch screen, a touch pad, a keyboard, a mouse, a camera, a microphone, an accelerometer, a gyroscope, or the like; an output apparatus 607 including a liquid crystal display (LCD), a speaker, a vibrator, or the like; a storage apparatus 608 including a hard disk or the like; and a communication apparatus 609. The communication apparatus 609 may allow wireless or wired communication between the electronic device 600 and other device to exchange data. Although Fig. 6 illustrates the electronic device 600 having various apparatuses, it should be understood that all the illustrated apparatuses are not required to be implemented or included. More or less apparatuses may be alternatively implemented or included. Each block shown in Fig. 6 may represent an apparatus or a plurality of apparatuses as required.

In particular, according to the embodiments of the present disclosure, the process described above with reference to the flow chart may be implemented in a computer software program. For example, an embodiment of the present disclosure includes a computer program product, which includes a computer program that is tangibly embedded in a computer-readable medium. The computer program includes program codes for performing the method as illustrated in the flow chart. In such an embodiment, the computer program may be downloaded and installed from a network via the communication apparatus 609, or may be installed from the storage apparatus 608, or may be installed from the ROM 602. The computer program, when executed by the processing apparatus 601, implements the above-mentioned functionalities as defined by the method of the embodiments of the present disclosure. It should be noted that the computer readable medium in the embodiments of the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above. In the embodiments of the present disclosure, the computer readable storage medium may be any physical medium containing or storing programs which may be used by a command execution system, apparatus or element or incorporated thereto. In the embodiments of the present disclosure, the computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wired, optical cable, RF (Radio Frequency) etc., or any suitable combination of the above.

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the accompanying drawings. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system performing specified functions or operations, or by a combination of a dedicated hardware and computer instructions.

The units involved in the embodiments of the present disclosure may be implemented by means of software or hardware. The described units may also be provided in a processor, for example, may be described as: a processor including an acquisition unit, a combination unit and a determination unit. Here, the names of these units do not in some cases constitute limitations to such units themselves. For example, the acquisition unit may also be described as "a unit for acquiring a face image, and acquiring coordinates of key points of a face contained in the face image".

As another aspect, embodiments of the present disclosure provide a computer-readable medium, which may be included in the apparatus described in the above embodiment, or may exist alone without being assembled into the apparatus. The computer-readable medium carries one or more programs, and when the one or more programs are executed by the apparatus, make the apparatus: acquire a face image, and acquire coordinates of key points of a face contained in the face image, wherein the face contained in the face image does not wear a mask; acquire a mask image, and combine, based on the coordinates of the key points, the mask image with the face image to generate a mask wearing face image containing a mask wearing face, wherein the mask image belongs to a mask image set, the mask image set comprises at least one kind of mask image, and different kinds of mask images contain different masks; and determine the mask wearing face image as a sample for train a deep neural network, wherein the deep neural network is used to detect faces.

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the present disclosure. Technical schemes formed by the above-described features being interchanged with, but not limited to, technical features with similar functions disclosed in the present disclosure are examples.

## Claims

1. A method for processing information, the method comprising:
acquiring (201, 401) a face image, and acquiring coordinates of key points of a face contained in the face image, wherein the face contained in the face image does not wear a mask;
acquiring (202) a mask image, and combining, based on the coordinates of the key points, the mask image with the face image to generate a mask wearing face image containing a mask wearing face, wherein the mask image belongs to a mask image set, the mask image set comprises at least one kind of mask image, and different kinds of mask images contain different masks; and
determining (203) the mask wearing face image as a sample for training a deep neural network, wherein the deep neural network is used to detect faces.

2. The method according to claim 1, wherein the method further comprises:
acquiring a target face image, and acquiring a target mask image from the mask image set;
combining the target mask image to a region beyond a face in the target face image to obtain a combination result; and
determining the combination result as another sample for training the deep neural network.

3. The method according to any one of claims 1-2, wherein the training steps of the deep neural network comprise:
acquiring a face image sample, and inputting the face image sample into a deep neural network to be trained;
predicting, by using the deep neural network to be trained, whether the face image sample contains a mask wearing face to obtain a first prediction result;
determining a loss value corresponding to the first prediction result based on the first prediction result, a reference result about whether the face image sample contains a mask wearing face, and a preset loss function; and
training, based on the loss value, the deep neural network to be trained to obtain a trained deep neural network.

4. The method according to claim 3, wherein the training steps further comprise:
predicting, by using the deep neural network to be trained, a position of the face contained in the face image sample to obtain a second prediction result; and
the predicting, by using the deep neural network to be trained, whether the face image sample contains a mask wearing face comprises:
predicting, by using the deep neural network to be trained, whether the object at the position is a face wearing a mask to obtain the first prediction result.

5. The method according to any one of claims 1-4, wherein after the mask wearing face image is generated, the method further comprises:
adjusting the position of the mask contained in the mask wearing face image to obtain an adjusted mask wearing face image, wherein the position of the mask comprises a longitudinal position.

6. The method according to any one of claim 1-5, wherein the combining the mask image with the face image comprises:
Updating (402) the size of the mask image according to a first preset corresponding relationship between specified points in the mask image and the coordinates of the key points of the face, and the acquired coordinates of the key points, so that the size of the updated mask image matches the size of the face in the acquired face image, wherein the coordinates of the key points in the first preset corresponding relationship comprise coordinates of key points on an edge of the face; and
combining (403) the updated mask image with the face image, so that each of the at least two specified points in the updated mask image overlaps the key point corresponding to the specified point in the face image, to generate a first mask wearing face image containing a mask wearing face.

7. The method according to claim 6, wherein the combining the mask image with the face image comprises:
updating the size of the mask image according to a second preset corresponding relationship between the specified points in the mask image and the coordinates of the key points of the face, and the coordinates of the acquired key points, and combining the updated mask image with the face image to generate a second mask wearing face image, wherein the positions of the masks on the mask wearing faces in the second mask wearing face image and the first mask wearing face image are different, and the position of the mask comprises a longitudinal position.

8. An apparatus for processing information, the apparatus comprising:
an acquisition unit (501), configured to acquire a face image, and acquire coordinates of key points of a face contained in the face image, wherein the face contained in the face image does not wear a mask;
a combination unit (502), configured to acquire a mask image, and combine, based on the coordinates of the key points, the mask image with the face image to generate a mask wearing face image containing a mask wearing face, wherein the mask image belongs to a mask image set, the mask image set comprises at least one kind of mask image, and different kinds of mask images contain different masks; and
a determination unit (503), configured to determine the mask wearing face image as a sample for training a deep neural network, wherein the deep neural network is used to detect faces.

9. The apparatus according to claim 8, wherein the apparatus further comprises:
a target acquisition unit, configured to acquire a target face image and acquire a target mask image from the mask image set;
a target combination unit, configured to combine the target mask image to a region beyond a face in the target face image to obtain a combination result; and
a sample determination unit, configured to determine the combination result as another sample for training the deep neural network.

10. The apparatus according to any one of claims 8-9, wherein the training steps of the deep neural network comprise:
acquiring a face image sample, and inputting the face image sample into a deep neural network to be trained;
predicting, by using the deep neural network to be trained, whether the face image sample contains a mask wearing face to obtain a first prediction result;
determining a loss value corresponding to the first prediction result based on the first prediction result, a reference result about whether the face image sample contains a mask wearing face, and a preset loss function; and
training, based on the loss value, the deep neural network to be trained to obtain a trained deep neural network.

11. The apparatus according to claim 10, wherein the training steps further comprise:
predicting, by using the deep neural network to be trained, a position of the face contained in the face image sample to obtain a second prediction result; and
the predicting, by using the deep neural network to be trained, whether the face image sample contains a mask wearing face comprises:
predicting, by using the deep neural network to be trained, whether the object at the position is a face wearing a mask to obtain the first prediction result.

12. The apparatus according to any one of claims 8-11, wherein the apparatus further comprises:
an adjustment unit, configured to adjust, after the mask wearing face image is generated, the position of the mask contained in the mask wearing face image to obtain an adjusted mask wearing face image, wherein the position of the mask comprises a longitudinal position.

13. An electronic device, comprising:
one or more processors; and
a storage apparatus, storing one or more programs,
wherein the one or more programs, when executed by the one or more processors, cause the one or more processors to implement the method according to any one of claims 1-7.

14. A computer-readable storage medium, storing a computer program thereon, wherein the computer program, when executed by a processor, causes the processor to implement the method according to any one of claims 1-7.

15. A computer program product comprising a computer program, the computer program, when executed by a processing apparatus (601), implementing the method according to any one of claims 1-7.
